# EUROPEAN PATENT APPLICATION

(11) **EP 2 166 633 A2**
(43) Date of publication of application: **24.03.2010**
(21) Application number: 09252063.4
(22) Date of filing: 25.08.2009
(51) Int. Cl.: H02G 3/12

(54) **Back box with power pocket for in-wall electronic components**

(30) Priority: 25.08.2008 US 189955 P
(71) Applicant: Russound/FMP Incorporated, Newmarket, NH 03857 (US)
(72) Inventor: Stein, Michael, Massachusetts 01913 (US); Zerbe, Walter, New Hampshire 03857 (US); Wollen, Bruce, Massachusetts 01969 (US); Bucci, John, Maine 03906 (US)
(74) Representative: Charig, Raymond Julian

(57) **Abstract**

A multi-part electrical/electronics enclosure that may be used for in-wall installation of intercom, home audio, lighting, HVAC or other automation controls and similar system components. The enclosure includes two major components including a back box, serving to enclose low voltage electronics, and a power pocket portion, fitting into at least one wall of the back box. The power pocket serves as an enclosure for high voltage alternating current electrical wire terminations, equipment connections, power supplies and the like. A trade separator fits between the back box and power pocket to completely enclose and isolate high voltage electrics from low voltage electronics. This solution provides maximize use of available space especially in retrofit applications. It also provides for servicing of electronics (disposed in back box) without accessing or servicing high voltage electrics in the power pocket.

## Description

### RELATED APPLICATION(S)

This application claims the benefit of U.S. Provisional Application No. 61/189,955, filed on August 25, 2008. The entire teachings of the above application are incorporated herein by reference.

### BACKGROUND OF THE INVENTION

The present invention relates to an in-wall enclosure serving as a housing for both low voltage and high voltage circuitry, while also providing isolated connection(s) to a high voltage Alternating Current (AC) power line.

Systems for automated distribution of entertainment media, control of lighting, intercom, security, and multi-room audio-visual systems are becoming more and more desirable in both homes and businesses. These systems typically involve some sort of control unit placed on or within a wall. The control unit may typically serve to enclose electronics and needs some sort of connection to a power source.

### SUMMARY OF THE INVENTION

In one preferred embodiment, a multi-piece electrical/electronics enclosure may be used for in-wall installation of keypads, controllers and similar devices. The devices may typically form part of an intercom, home audio, automated lighting, HVAC, security or similar system. The multi-piece enclosure includes a back box serving to house low voltage electronics, and a power pocket fitting into at least one wall of the back box. The power pocket fits into and extends away from the back box to provide additional space. The power pocket preferably serves as a housing for high voltage electrical wires, high voltage circuitry connections, power supplies or the like.

A trade can separator fit between the back box and power pocket to enclose and isolate high voltage electric circuits from low voltage electronics.

In still other optional embodiments, a power supply sub-housing may fit into the power pocket.

This solution can be used in applications to retrofit existing buildings, to maximize use of available space between vertical wall studs.

The arrangement also provides ease in later servicing of electronics, disposed in the back box, without the need for access to high voltage electrics or wiring that can now remain enclosed in the power pocket. The arrangement permits certain trades, such as audio equipment installers, to access the low voltage circuitry without being exposed to high voltage line currents or voltages.

### BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
Fig. 1 is an isometric view of an in-wall enclosure according to certain aspects of an embodiment.
Fig. 2 is an exploded view of the components of the enclosure.
Fig. 3 is a more detailed view of a back box.
Fig. 4 is a more detailed view of a trade separator.
Fig. 5 is a more detailed view of a power pocket.
Fig. 6 is a more detailed view of a power supply sub-housing.
Fig. 7 illustrates the enclosure assembled in a wall.
Fig. 8 illustrates a faceplate attached to the enclosure.
Fig. 9 is a side view of the assembled unit.

### DETAILED DESCRIPTION OF THE INVENTION

A description of example embodiments of the invention follows.

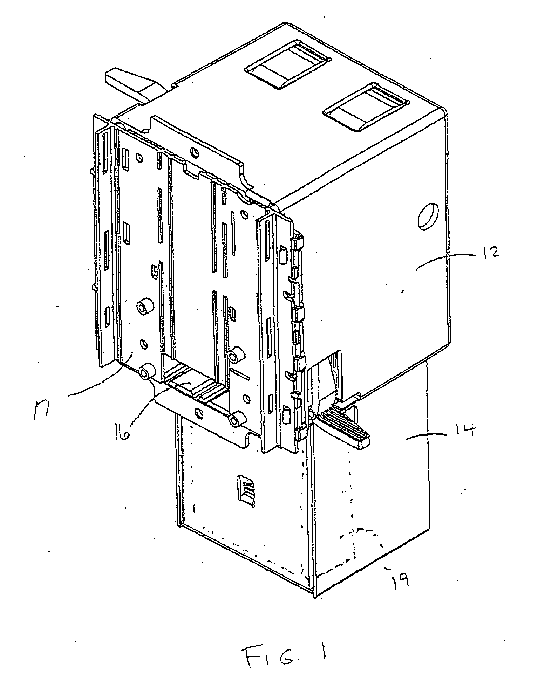

Fig. 1 shows an electrical/electronics enclosure assembly 10 that embodies one or more aspects of the present invention. Enclosure assembly 10 includes a back box 12, a power pocket 14, and trade separator 16. An optional frame 17 and optional power supply sub-housing 19 are also shown. The assembly 10 can be used as an in-wall enclosure for system components that require both high voltage electrics and low voltage electronics. Such enclosures 10 can find use as housings for switches, buttons, keypads and other user control devices. These devices may control various types of systems such as distributed multimedia, intercom, automated lighting, security, alarm, heating ventilating air conditioning (HVAC) and other systems. The components of enclosure 10 may be formed of aluminum, metallic-coated polymers, or other suitable materials.

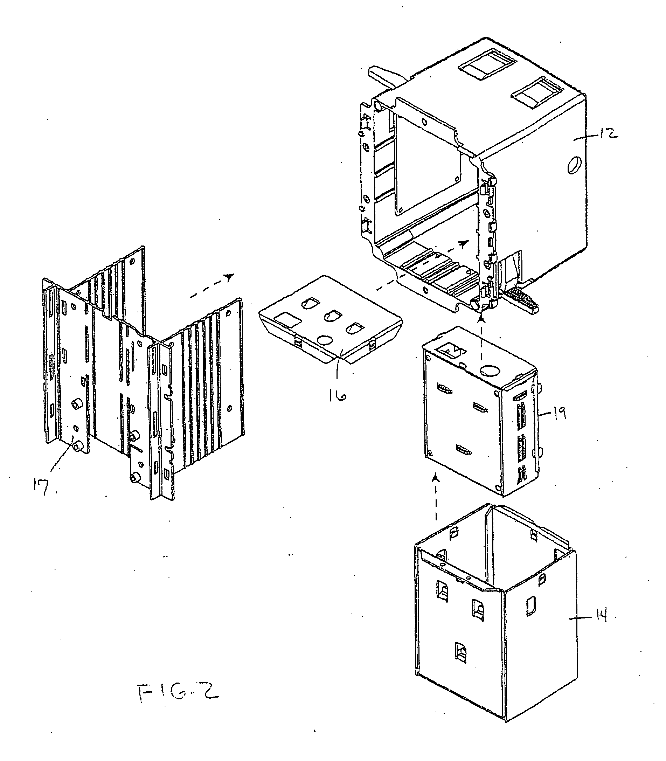

Fig. 2 is an exploded view showing these same components and how they fit together. Assembly of the enclosure 10 will be described below.

In general the power pocket 14 serves to enclose high voltage wiring and any associated high voltage circuitry that are connected to a high voltage power source, for example, a household (mains) 120 or 240 volt Alternating Current (AC) source. Power pocket 14 may optionally enclose a power supply (within sub-housing 19) to convert incoming 120 volt AC to low voltage (5 volt) DC as needed to provide low voltage power for electronic circuits.

Back box 12 serves to enclose such Direct Current (DC) low voltage electronic components (e.g., 5 to 10 volts) that may include lighting controls, keypads, audio amplifiers, intercom circuits, speakers, HVAC/automation controls and the like. The back box 12 may also contain low voltage speaker wire termination points for external speakers or the like.

The removable trade separator 16 allows for the high voltage electric circuits to be isolated and enclosed by power pocket 14, while still allowing for easy access to the electronics inside back box 12 even after initial assembly, without removing back box 12 from a wall in which it may be installed. This solution, including a separately manufactured back box 12 and power pocket 14, provides several other advantages. It is especially advantageous in a retrofit installation where access to interior portions of a wall may be limited, as will be discussed in more detail below.

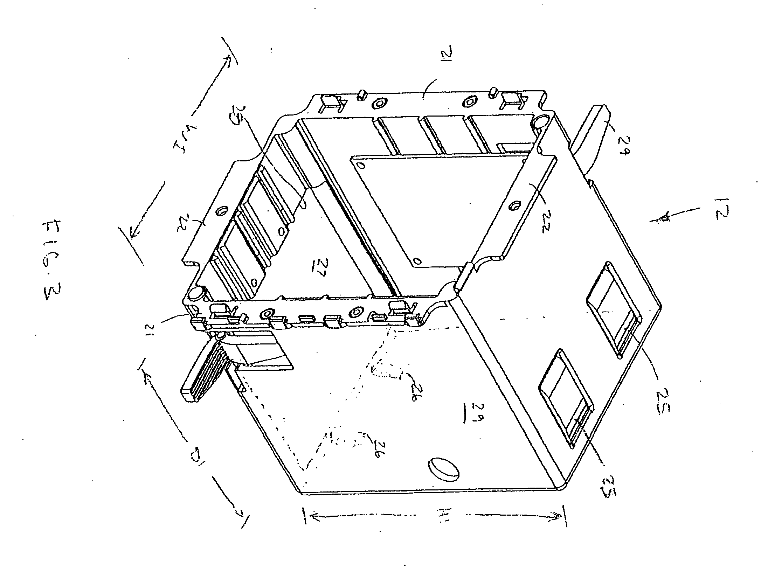

Turning attention to Fig. 3 a back box 12 is shown in more detail. This embodiment of back box 12 has top flanges 21 and side 22 on the front face thereof. These flanges are provided for attachment to wallboard using screws or nails and the like as is conventional for electrical wiring boxes.

The back box 12 has openings (or punch outs) 25 such as in the top portion thereof to provide egress for low voltage wires.

Notably, back box 12 also has an opening 24 in a bottom portion thereof. The opening 27 accommodates insertion of power pocket 14 after back box 12 is installed into a wall. The opening 27 may have peripheral elements associated with it to accommodate snap-fit type installation of power pocket 14. In particular, one or more clips 26 may be placed on a lower portion of the back wall 29 of back box 12. A front lip portion 28 may also be shaped to support the power pocket 14 at the front of back box 12.

While opening 27 is shown in the bottom portion of back box 12, it should be understood that opening 27 can be in an upper or either side portion as well.

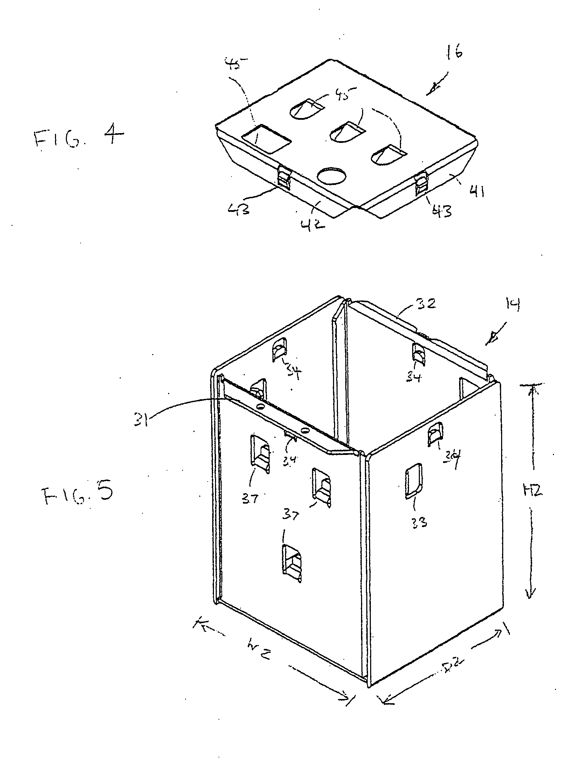

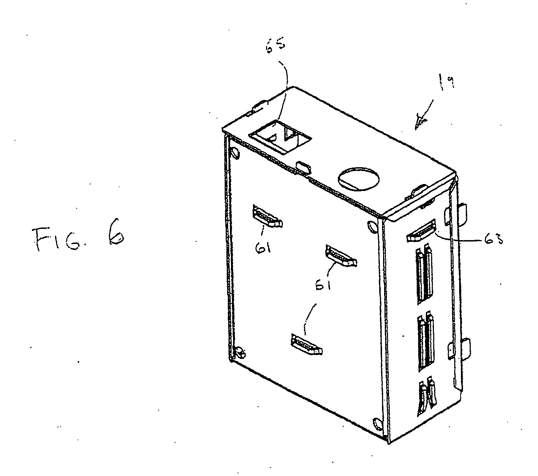

Power pocket 14 is shown in more detail in Fig. 5. Power pocket 14 may have formed thereon upper front flange 31 and upper rear flange 32. Flange 31 is shaped to rest on front lip 28 of back box 12, and rear flange 32 is shaped to engage clips 26 in the back wall 29 of back box 12. Power pocket 14 is intended to enclose high voltage connections, terminal points, or components. For example, connections can be made therein between a power supply and a main 120/240 volt AC supply. Such a power supply (not shown in Fig. 3) converts an AC voltage on the main to a DC supply voltage. The power supply circuitry may be enclosed in a separate sub-housing, as shown in Fig. 6, for ease of installation and later servicing.

The trade separator 16, as shown in Fig. 4, is typically a metal or metallic-coated plate having flanges 41, 42 shaped to engage the upper portion of power pocket 14. For example, one or more ball portions 43 on flange 42 may engage corresponding socket portions 34 formed in the upper portion of power pocket 14. This ball and socket friction fit allows for later removal of trade separator 16 should that become necessary for servicing of wiring and/or components installed in power pocket 14. One or more egress holes 45 for wires or connectors are provided in trade separator 16 so that low voltage signal connections can pass between power pocket 14 and the electronics in back box 12.

It should be understood that power pocket 14 may be assembled into to back box 12 using other than the clip and friction fit type fastenings. The same is true for engagement of trade separator 16 with the top portion of power pocket 14. For example, screw type fasteners can also be used for these purposes. However, it is believed that in most implementations the tool-less friction-fit flanges 31, 32 and 42, clips 26, balls 42 and sockets 34 are preferred for ease of assembly and dis-assembly.

Fig. 6 illustrates a sub-housing 19 that may be used to further enclose high voltage circuitry such as an AC to DC power supply. If utilized, power supply sub-housing 19 also friction-fits into power pocket 14 via nubs 61, 63 and corresponding clips 37 or holes 33.

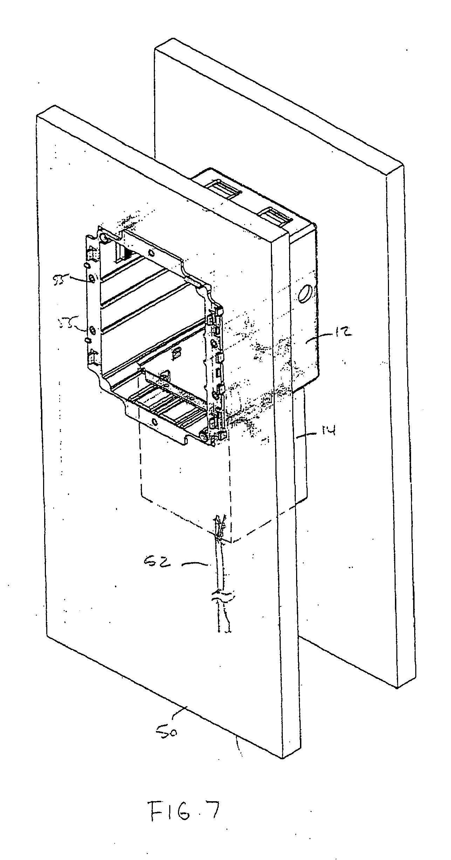

Back box 12, power pocket 14, sub-housing 19 and trade separator 16 are typically installed in wall board 50 in a particular order. Referring to Figs. 2 and 7, a first tradesperson brings a source of 120/240 AC line voltage such as a Romex^{™} cable 52 near the desired location. Romex^{™} is a trademark of the Southwire Company of Carrolton, Georgia, USA. This step would typically be performed by a licensed high voltage electrician. The electrician can then make a suitable opening (but only the size of back box 12) in existing wall board 50, and then place back box 12 into the opening and secure it to the wall using wallboard screws 55. The licensed electrician can then run Romex^{™} (non-metallic cable or other suitable electrical feeding medium) 52 into the power pocket 14 and make connections inside power pocket 14, e.g. to a power supply 19, and then feeding out any low voltage wires and/or connectors from the power supply through holes in or connectors adjacent trade separator 16. He then snaps power pocket 14 into the back box 12, and then also snaps trade separator 16 into place.

At this point, an audio equipment system integrator (who may not necessarily be a licensed electrician) can then arrive at the location and install the low voltage components, e.g., install keypad electronics in back box 12, make the connection from power supply 19 to the same, and place face plate 17 and any keypads or facia (not shown in Fig. 2 or 7) to complete the installation.

Of course other trades can be involved. For example, a carpenter may first install back box 12 into wall board 50, leaving it to a licensed electrician to then later insert power pocket 14 into back box 12 and connect the high voltage wiring and/or power supply 19, and install trade separator 16.

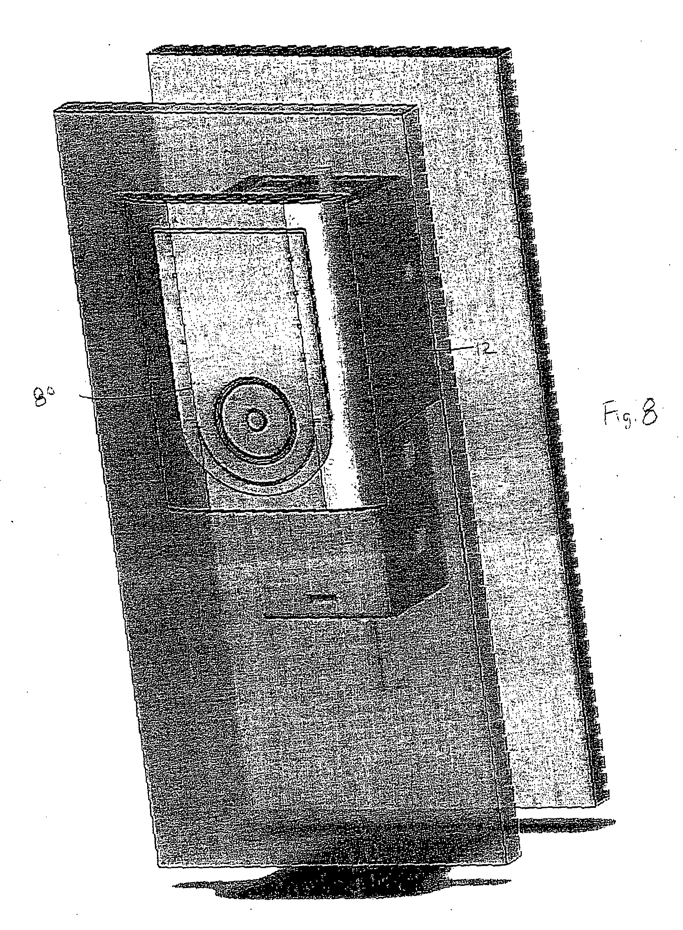

Fig. 8 is the fully assembled unit, including an illustrated keypad/facia 80.

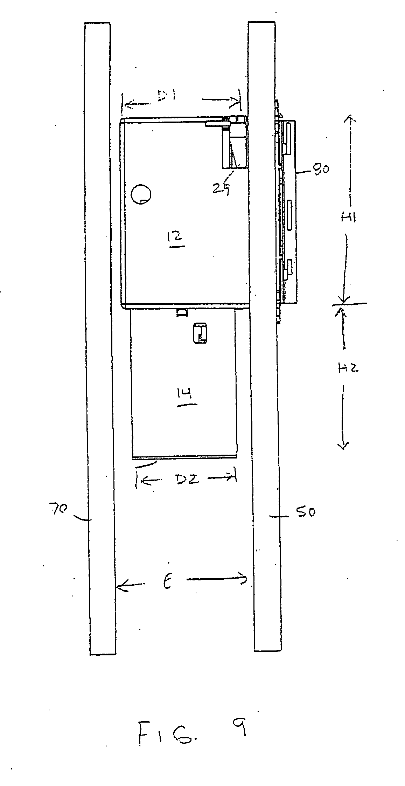

Fig. 9 illustrates the assembled unit from a cut away side view. Wall board 50, into which back box 12 was installed, is on the right hand side of the figure. Wall board 70 associated with, for example, a wall in an adjacent room, is shown on the left hand side. In this view it can be understood that if entire electrical enclosure 10 had been of unitary construction, it would only have been possible to provide an area of about W1 x H1 x D1 (Fig. 3) into which system components could be placed. This limitation would be imposed by the distance E between wall board 50 and wall board 70 and the need to fit the unit into the wallboard opening 24.

However, by first installing back box 12 having an opening 24 into which only power pocket 14 can be fit, and then placing power pocket 14 therein, an additional area of approximately W2 x L2 x D2 (Fig. 5) is provided. In other words, especially in a retrofit situation, the depth D1 of back box 12 could otherwise be no wider than the distance E between the two pieces of wall board 50 and 70, without our invention.

In addition, electronics installed in the back box 12 can be serviced without interrupting and/or requiring access to high voltage wiring or components in power pocket 14. For example, in case of a lightening strike, component failure, or system component upgrades, a system integrator can merely remove facia 80 and then face plate 17, and obtain access to electronic low voltage system components. There is no need for exposure to high voltage wiring or power supply sub-housing 19 in power pocket 14. Thus a high voltage licensed electrician need not be called in to further service enclosure 10 in such situations.

The invention can be used to satisfy Underwriter Laboratories (UL) and/or local building codes that require high and low voltage electric and electronics to be in physically separate enclosures.

While this invention has been particularly shown and described with references to example embodiments thereof, it will be understood by those skilled in the art that various changes in form and details may be made therein without departing from the scope of the invention encompassed by the appended claims.

## Claims

1. An enclosure apparatus comprising:
a back box, adapted to fit into a wall opening, the back box having an opening in at least one wall, and providing an enclosure for low voltage electronic components; and
a power pocket, adapted to fit into the opening in at least one wall of the back box, the power pocket providing an enclosure for high voltage electrical wiring.

2. The apparatus of Claim 1 additionally comprising:
a separator, disposed between the back box and the power pocket, for isolating low voltage electronic components from high voltage electrical wiring.

3. The apparatus of Claim 1 additionally wherein a separator has one or more ball portions that engage socket portions formed on the power pocket.

4. The apparatus of Claim 1 additionally comprising a power supply for fitting into the power pocket.

5. An apparatus as in Claim 4 additionally comprising a sub-housing for enclosing the power supply and adapted to fit into the power pocket.

6. The apparatus of Claim 1 wherein the power pocket fits into an opening in a bottom wall of the back box.

7. The apparatus of Claim 1 wherein the back box is formed from at least one of a metallic material or a metallic coated material.

8. The apparatus of Claim 7 wherein the power pocket is formed of metal or a metallic coated material.

9. The apparatus of Claim 1 wherein the back box has flanges on a front portion thereof for mounting to a wall.

10. The apparatus of Claim 1 additionally comprising a base plate adapted to fit a front wall of the back box.

11. A method for enclosing electronic components comprising the steps of:
inserting a back box into an opening in a wall, the back box having an opening in at least one portion thereof;
inserting a power pocket portion into the opening of the back box;
inserting a source of main Alternating Current (AC) to the power pocket;
inserting a trade separator between the back box and the power pocket;
installing at least one electronic component in the back box.

12. The method of Claim 11 additionally comprising attaching a base plate to a front face of the back box.

13. The method of Claim 11 wherein the step of inserting the power pocket into the back box comprises snap fitting them together.
